# FASCICULE DE BREVET EUROPEEN

(11) **EP 3 692 007 B1**
(45) Date de publication et mention de la délivrance du brevet: **23.08.2023**
(21) Numéro de dépôt: 18797005.8
(22) Date de dépôt: 03.10.2018
(51) Int. Cl.: C03C 23/00

(54) **PROCÉDÉ DE TRAITMENT D'UNE FEUILLE DE VITROCÉRAMIQUE MONOLITHIQUE**
VERFAHREN ZUR BEHANDLUNG EINER MONOLITHISCHEN GLASKERAMIKPLATTE
METHOD OF TREATMENT OF A MONOLITHIC GLASS CERAMIC SHEET

(30) Priorité: 05.10.2017 FR 1759336
(43) Date de publication de la demande: 12.08.2020
(73) Titulaire: Eurokera S.N.C., 02400 Château-Thierry (FR)
(72) Inventeur: COSTANTINI, Daniele, 75005 Paris (FR); OZANAM, Cécile, 91300 Massy (FR); GUEDON, Thibault, 75010 Paris (FR); LECOMTE, Emmanuel, 02400 Nesles la Montagne (FR)
(74) Mandataire: Saint-Gobain Recherche
(86) Numéro de dépôt international: PCT/FR2018/052430
(87) Numéro de publication internationale: WO 2019/069016

(56) Documents cités:
- US-A1- 2014 305 929
- US-A1- 2016 031 755
- US-A1- 2016 169 531
- US-A1- 2016 280 594

## Description

La présente invention concerne un procédé de traitement d'une feuille de vitrocéramique monolithique par laser, permettant notamment de modifier ses propriétés optiques, ainsi qu'une feuille de vitrocéramique susceptible d'être obtenue par ce procédé.

Plusieurs méthodes permettant de disposer, dans une feuille de vitrocéramique colorée dans la masse, d'une zone présentant une transmission lumineuse supérieure par rapport au reste de la feuille de vitrocéramique ont été décrites.

Une première consiste à insérer dans feuille de vitrocéramique colorée un morceau d'un autre matériau, par exemple en verre ou en vitrocéramique plus claire. Cette méthode nécessite cependant la production de deux matériaux différents. Par ailleurs, la liaison entre ces deux matériaux, réalisée par exemple par collage ou soudure, crée un point de fragilité dans le matériau composite ainsi obtenu.

Une deuxième solution consiste à modifier localement la transmission lumineuse de la feuille de vitrocéramique par le dépôt d'un revêtement servant de filtre optique sur une partie seulement de la feuille de vitrocéramique. Cette méthode a cependant comme inconvénient d'être compliquée et coûteuse à mettre en oeuvre. Par ailleurs, il n'est pas évident de disposer d'un revêtement qui permette à la fois d'atteindre les propriétés optiques souhaitées et d'atteindre les propriétés d'adhésion et/ou de durabilité mécanique et/ou chimique requises.

Plus récemment, il a été proposé des méthodes de modification de la transmission lumineuse de vitrocéramiques à l'aide d'un traitement laser. Un tel traitement laser permet d'augmenter localement la transmission lumineuse d'une feuille de vitrocéramique colorée dans la masse. Cependant, ces méthodes utilisent un faisceau de petite taille (au mieux un faisceau d'une dizaine de millimètres de diamètre) ce qui nécessite un temps de traitement important pour délimiter de larges zones. De même, la réalisation de zones aux contours complexes est fastidieuse. Les demandes de brevet US 2016/031755 A1 et US 2014/305929 A1 décrivent un procédé de traitement d'une feuille de vitrocéramique monolithique à l'aide d'un rayonnement laser.

La présente invention propose un procédé de traitement d'une feuille de vitrocéramique colorée dans la masse à l'aide d'un rayonnement laser permettant d'obvier aux inconvénients des méthodes décrites ci-dessus. Le procédé selon l'invention permet notamment de traiter rapidement de grandes surfaces et de proposer une certaine flexibilité. Plus précisément, la présente invention concerne un procédé de traitement d'une feuille de vitrocéramique monolithique comprenant :
- la fourniture d'une feuille de vitrocéramique monolithique colorée dans la masse ;
- le positionnement de la feuille de vitrocéramique sur un support ; et
- le traitement de la feuille de vitrocéramique à l'aide d'un rayonnement laser ;
caractérisé en ce que le support présente une première zone de surface réfléchissant le rayonnement laser et une deuxième zone de surface absorbant le rayonnement laser, et en ce que la feuille de vitrocéramique positionnée sur le support défile en regard du rayonnement laser.

Il a été observé que le procédé de l'invention permet en effet d'augmenter significativement la transmission lumineuse de la feuille de vitrocéramique en regard de la(des) zone(s) de surface du support réfléchissant le rayonnement laser. Au contraire, bien que traitée par le rayonnement laser, la transmission des zones de la feuille de vitrocéramique en regard de la(des) zone(s) de surface du support absorbant le rayonnement laser est beaucoup moins affecté par le traitement laser. Il est ainsi possible d'« éclaircir » sélectivement certaines zones de la feuille de vitrocéramique en fonction de la(des) zone(s) de surface réfléchissant le rayonnement laser définie(s) sur le support tout en traitant par laser des zones plus larges, voire l'ensemble de la feuille de vitrocéramique. Le procédé selon l'invention présente donc l'avantage d'être plus simple et plus flexible que les procédés de modification de la transmission lumineuse de feuilles de vitrocéramique connus précédemment.

La feuille de vitrocéramique est monolithique, c'est-à-dire qu'elle est formée d'un seul bloc/d'une seule pièce. Elle présente typiquement une épaisseur de 2 à 15 mm, notamment 3 à 10 mm, par exemple 4, 5, 6, 7 ou 8 mm. Les dimensions (longueur et largeur) de la feuille de vitrocéramique dépendent de l'application à laquelle elle est destinée : elle présente généralement des dimensions de 20 à 120 cm, notamment pour des applications dans des dispositifs de cuisson, mais peut également présenter des dimensions plus importantes, par exemple une largeur pouvant aller jusqu'à 120 cm, voire 180 cm, et une longueur supérieure à 200 cm, pour des applications de plan de travail.

La feuille de vitrocéramique peut présenter une face avant (généralement la face destinée à être visible par l'utilisateur) essentiellement lisse, c'est-à-dire une surface pour laquelle les irrégularités de surface sont telles que le rayonnement incident sur la surface n'est pas significativement dévié par ces irrégularités de surface. La face arrière peut être également lisse. Elle peut présenter au contraire une surface texturée, telle qu'une surface comprenant des picots.

La feuille de vitrocéramique utilisée est généralement une vitrocéramique d'aluminosilicate de lithium. Elle présente de préférence une composition chimique comprenant les constituants suivants dans les limites définies ci-après exprimées en pourcentages pondéraux :

| | |
|---|---|
| SiO₂ | 52 - 75 % |
| Al₂O₃ | 18 - 27% |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5 % |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 % |
| Affinants | 0 - 3 % |
| Colorants | 0 - 1 %. |

Les affinants peuvent être choisis par exemple parmi les oxydes d'arsenic, d'antimoine ou d'étain. Dans un mode de réalisation particulier, la feuille de vitrocéramique est exempte d'oxyde d'antimoine et d'arsenic.

La feuille de vitrocéramique est colorée dans la masse. Elle comprend ainsi des colorants notamment choisis parmi l'oxyde de vanadium, l'oxyde de fer, l'oxyde de cobalt, l'oxyde de cérium, l'oxyde de sélénium, l'oxyde de chrome, voire l'oxyde de nickel, l'oxyde de cuivre et l'oxyde de manganèse. La feuille de vitrocéramique est de préférence une vitrocéramique colorée à l'oxyde de vanadium. Elle peut comprendre de 0,01 à 0,5 % en poids d'oxyde de vanadium éventuellement en combinaison avec d'autres colorants tels que l'oxyde de fer, l'oxyde de cobalt ou l'oxyde de manganèse.

La feuille de vitrocéramique est positionnée sur un support avant de subir le traitement laser selon l'invention. De préférence, la feuille de vitrocéramique repose entièrement sur le support, c'est-à-dire qu'une des surfaces de la feuille de vitrocéramique est totalement en contact avec le support. Le support présente une première zone de surface réfléchissante et une deuxième zone de surface non-réfléchissante (c'est-à-dire essentiellement absorbante et/ou transparente à la longueur d'onde du rayonnement laser). Par surface réfléchissante on entend au sens de la présente invention une surface réfléchissant au moins 50 %, de préférence au moins 70%, voire au moins 80 % ou même au moins 90 %, du rayonnement laser. A contrario, par surface non-réfléchissante on entend au sens de la présente invention une surface absorbant et/ou transmettant au moins 80 %, de préférence au moins 90%, du rayonnement laser. La réflexion est ici définie comme la réflexion spéculaire du rayonnement laser par le support, celle-ci étant égale à la valeur de 100% à laquelle sont soustraites la transmission, l'absorption et la réflexion diffuse du rayonnement laser par le support. Inversement, l'expression « absorption et/ou transmission » est ici définie comme la part du rayonnement laser transmis ou absorbé par le support, celle-ci étant égale à la valeur de 100% à laquelle est soustraite la réflexion totale (spéculaire et diffuse) du rayonnement laser par le support. Dans un mode de réalisation particulier, la surface non-réfléchissante est une surface essentiellement absorbante. Le support peut présenter plusieurs zones de surface réfléchissante et/ou plusieurs zones de surface non-réfléchissante.

Le support peut également comprendre au moins une zone de surface de réflexion intermédiaire. Par zone de surface de réflexion intermédiaire au sens de la présente invention, on entend une zone de surface présentant une réflexion du rayonnement laser inférieure à la première zone de surface réfléchissante et supérieure à la deuxième zone de surface non-réfléchissante. Le support peut également comprendre plusieurs zones de surface de réflexion intermédiaire. Dans ce cas, chaque zone de surface de réflexion intermédiaire peut avoir des propriétés de réflexion du rayonnement laser différentes des autres zones de surface de réflexion intermédiaire. A contrario, toutes les zones de surface de réflexion intermédiaire peuvent avoir les mêmes propriétés de réflexion du rayonnement laser. La(les) zone(s) de surface de réflexion intermédiaire présente(nt) typiquement une réflexion de 20 à 50%, voire de 10 à 70%, du rayonnement laser.

La surface de la(des) zone(s) de surface réfléchissantes, le cas échéant additionné de celle de la(des) zone(s) de surface de réflexion intermédiaire, représente généralement au moins 1%, de préférence au moins 5%, voire au moins 10%, de la surface du support. Elle représente généralement au plus 50% de la surface du support. Le support a typiquement une taille au moins égale à la taille de la vitrocéramique à traiter, par exemple des dimensions (longueur et largeur) de 20 à 120 cm.

Le procédé selon l'invention comprend une étape de traitement à l'aide d'un rayonnement laser. Plus particulièrement, la feuille de vitrocéramique est irradiée par le rayonnement laser en regard du support. L'utilisation d'un rayonnement laser permet d'apporter l'énergie nécessaire à la feuille de vitrocéramique pour modifier significativement la transmission lumineuse de la(des) zone(s) de la feuille de vitrocéramique en regard de la(des) zone(s) de surface réfléchissante du support. Au contraire, la(les) zone(s) de la feuille de vitrocéramique en regard de la(des) zone(s) de surface non-réfléchissante du support sont moins affectées par le traitement laser. Sans vouloir être lié par une quelconque théorie, il semble que l'augmentation de la transmission lumineuse obtenue par le traitement laser soit due à une décoloration de la feuille de vitrocéramique résultant d'une modification des équilibres d'oxydo-réduction au niveau des éléments colorants. Il est supposé que l'énergie apportée par le rayonnement laser à la(aux) zone(s) de la feuille de vitrocéramique en regard de la(des) zone(s) de surface non-réfléchissante du support n'est pas suffisante pour affecter significativement la transmission lumineuse. Contrairement à la(aux) zone(s) de la feuille de vitrocéramique en regard de la(des) zone(s) de surface réfléchissante, la(les) zone(s) en regard de la(des) zone(s) de surface non-réfléchissante ne sont en effet traversé qu'une seule fois par le rayonnement laser.

Dans un mode de réalisation particulier, un masque peut être disposé au-dessus de la feuille de vitrocéramique. Le masque a pour fonction d'empêcher l'irradiation des zones masquée par ledit masque par le rayonnement laser. Il est ainsi possible de protéger certaines zones de la feuille de vitrocéramique de toute modification des propriétés optiques dues au traitement laser subséquent.

Le rayonnement laser est de préférence issu d'au moins un faisceau laser formant une ligne (appelée « ligne laser » dans la suite du texte) qui irradie simultanément au moins une partie de la largeur de la feuille de vitrocéramique, typiquement au moins 5%, voire au moins 10%, au moins 20%, au moins 50% ou même de préférence la totalité de la largeur de la feuille de vitrocéramique. Le faisceau laser en ligne peut notamment être obtenu à l'aide de systèmes optiques de focalisation. Afin de pouvoir irradier simultanément toute la largeur de la feuille de vitrocéramique, la ligne laser peut être obtenue en combinant plusieurs lignes laser élémentaires. L'épaisseur des lignes laser élémentaires est de préférence comprise entre 0,01 et 1 mm. Leur longueur est typiquement comprise entre 5 mm et 1 m. Les lignes laser élémentaires sont généralement juxtaposées côte à côte pour former une ligne laser unique de sorte que toute la surface de la feuille de vitrocéramique soit traitée simultanément.

Les sources laser sont typiquement des diodes laser ou des lasers fibrés, notamment des lasers à fibre, à diodes ou encore à disque. Les diodes laser permettent d'atteindre de manière économique de fortes densités de puissance par rapport à la puissance électrique d'alimentation, pour un faible encombrement. L'encombrement des lasers fibrés est encore plus réduit, et la puissance linéique obtenue peut être encore plus élevée, pour un coût toutefois plus important. On entend par lasers fibrés des lasers dans lesquels le lieu de génération du rayonnement laser est déporté spatialement par rapport à son lieu de délivrance, le rayonnement laser étant délivré au moyen d'au moins une fibre optique. Dans le cas d'un laser à disque, le rayonnement laser est généré dans une cavité résonnante dans laquelle se trouve le milieu émetteur qui se présente sous la forme d'un disque, par exemple un disque mince (d'environ 0,1 mm d'épaisseur) en Yb:YAG. Le rayonnement ainsi généré est couplé dans au moins une fibre optique dirigée vers le lieu de traitement. Le laser peut également être à fibre, au sens où le milieu d'amplification est lui-même une fibre optique. Les lasers à fibre ou à disque sont de préférence pompés optiquement à l'aide de diodes laser. Le rayonnement issu des sources laser est de préférence continu.

La longueur d'onde du rayonnement laser, donc la longueur d'onde de traitement, est de préférence comprise dans un domaine allant de 500 à 1300 nm, notamment de 800 à 1200 nm. Une longueur d'onde de 900 à 1100 nm est particulièrement adaptée pour le traitement de feuilles de vitrocéramique colorées au vanadium. Des diodes laser de puissance émettant à une ou plusieurs longueurs d'onde choisie parmi 808 nm, 880 nm, 915 nm, 940 nm ou 980 nm se sont révélées particulièrement bien appropriées. Dans le cas d'un laser à disque, la longueur d'onde de traitement est par exemple de 1030 nm (longueur d'onde d'émission pour un laser Yb :YAG). Pour un laser à fibre, la longueur d'onde de traitement est typiquement de 900 à 1100 nm, par exemple 1070 nm.

Le rayonnement laser a typiquement une puissance P de 10 à 1000 W, de préférence de 50 à 500 W, voire de 70 à 300 W.

Lors du traitement de la feuille de vitrocéramique, on crée un déplacement relatif entre d'une part l'ensemble formé par la feuille de vitrocéramique disposée sur le support, et d'autre part la ligne laser. L'ensemble feuille de vitrocéramique et support peut ainsi être mis en déplacement, notamment en défilement en translation en regard de la ligne laser fixe, généralement en dessous. Ce mode de réalisation est particulièrement appréciable pour un traitement en continu. Dans un autre mode de réalisation, la ligne laser peut être mise en mouvement, notamment en défilement en translation en regard de l'ensemble feuille de vitrocéramique et support, généralement au-dessus. La ligne peut notamment irradier toute la largeur de la feuille de vitrocéramique en une seule fois. De façon alternative, lorsque la ligne laser n'est pas suffisamment longue, plusieurs passages de la ligne laser peuvent être nécessaires si un traitement de toute la largeur de la feuille de vitrocéramique est souhaité. La ligne laser, et donc éventuellement chaque ligne laser élémentaire, est de préférence disposée perpendiculairement à la direction de défilement relatif.

L'ensemble feuille de vitrocéramique et support peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement.

Toutes les positions relatives de la feuille de vitrocéramique et du laser sont bien entendu possibles, du moment que la feuille de vitrocéramique peut être convenablement irradiée. La feuille de vitrocéramique sera le plus généralement disposée de manière horizontale, mais elle peut aussi être disposée verticalement, ou selon toute inclinaison possible. Lorsque la feuille de vitrocéramique est disposée horizontalement, le laser est généralement disposé de manière à irradier la face supérieure de celle-ci. Le laser peut également irradier la face inférieure de la feuille de vitrocéramique. Dans ce cas, le support doit être disposé au-dessus de la feuille de vitrocéramique. Il faut également que le système de convoyage de la feuille de vitrocéramique, lorsque ce dernier est en mouvement, laisse passer le rayonnement dans la zone à irradier. C'est le cas par exemple lorsque l'on utilise des rouleaux de convoyage : les rouleaux étant disjoints, il est possible de disposer le laser dans une zone située entre deux rouleaux successifs.

La vitesse de défilement, c'est-à-dire la différence entre les vitesses respectives de la feuille de vitrocéramique et de la ligne laser, est généralement fonction de la puissance du rayonnement laser utilisée et de l'absorption de la feuille de vitrocéramique à la longueur d'onde du rayonnement laser. La vitesse de défilement est d'autant plus élevée que la puissance du laser est élevée et que l'absorption de la feuille de vitrocéramique à la longueur d'onde du rayonnement laser est élevée. La vitesse de défilement v est généralement de 1 à 1000 mm/min, de préférence de 5 à 500 mm/min, voire de 10 à 200 mm/min. Le ratio la puissance du rayonnement laser et la vitesse de défilement (P/v) est généralement supérieur à 1,8 W.min/mm, voire 3 W.min/mm, la puissance étant exprimée en W et la vitesse de défilement en mm/min. Il est de préférence inférieur à 150 W.min/mm, voire 100 W.min/mm ou 50 W.min/mm. Alternativement ou cumulativement, la relation entre la puissance du rayonnement laser P et la vitesse de défilement v satisfait de préférence la relation P = a.v + b, dans laquelle a est un paramètre allant de 1,5 à 3,0 W.min/mm, de préférence 2,0 à 2,6 W.min/mm et b est un paramètre allant de 50 à 100 W, de préférence de 60 à 90 W.

De préférence, l'absorption de la feuille de vitrocéramique à la longueur d'onde du rayonnement laser est supérieure ou égale à 20%, de préférence supérieure à 25% ou 30%, et inférieure ou égale à 70%, de préférence inférieure ou égale à 60% ou même 50%. L'absorption est définie comme étant égale à la valeur de 100% à laquelle sont soustraites la transmission et la réflexion de la feuille de vitrocéramique, mesurées pour une épaisseur de 4 mm.

Le traitement laser de la feuille de vitrocéramique provoque une augmentation significative de la transmission lumineuse de celle-ci en regard de la(des) zone(s) de surface réfléchissante du support. La transmission lumineuse est définie dans la présente invention comme la transmission lumineuse intrinsèque de la feuille de vitrocéramique en elle-même (respectivement de zones de la feuille de vitrocéramique), c'est-à-dire sans la présence d'un quelconque revêtement. La transmission lumineuse est telle que définie dans la norme ISO 9050:2003 mesurée sous illuminant D65, observateur 2°. Ainsi, la feuille de vitrocéramique obtenue après traitement laser comprend une zone A, en regard de la(des) zone(s) de surface réfléchissante du support, et une zone B, en regard de la(des) zone(s) de surface non-réfléchissante du support, la zone A présentant une transmission lumineuse supérieure à celle de la zone B. Dans le cas où certaines zones de la feuille vitrocéramique ne subissent pas de traitement laser (irradiation partielle de la feuille de vitrocéramique par exemple du fait de l'utilisation d'un masque), la zone B peut présenter une transmission lumineuse sensiblement supérieure aux zones de la feuille vitrocéramique non irradiées.

La présence de zones de surface de réflexion intermédiaire sur le support permet l'obtention, après traitement laser, de zones de transmission lumineuse intermédiaire sur la ou les zones de la feuille de vitrocéramique en regard de ces zones de surface de réflexion intermédiaire. Ces zones de transmission lumineuse intermédiaire présentent une transmission lumineuse supérieure à celle de la deuxième zone et inférieure à celle de la première zone.

La feuille de vitrocéramique présente, après traitement laser, une surélévation de la surface de la face avant en regard de la ou des zones de surface réfléchissante du support, voire, le cas échéant, des zones de surface de réflexion intermédiaire.

Il est également décrit une feuille de vitrocéramique susceptible d'être obtenue par le procédé décrit ci-dessus. Ainsi, il est décrit une feuille de vitrocéramique monolithique colorée dans la masse comprenant une première zone et une deuxième zone, caractérisée en ce que la première zone présente une transmission lumineuse supérieure à celle de la deuxième zone.

La première zone présente typiquement une transmission lumineuse supérieure à 3%, voire supérieure à 5%, ou même 8%_ou 10%, et pouvant aller jusqu'à 20%, voire 25%. La deuxième zone typiquement une transmission lumineuse inférieure à 5%, voire inférieure à 3%. La première zone peut présenter une transmission lumineuse supérieure à 1,5 fois, voire supérieur à deux fois, de préférence quatre fois, voire cinq fois la transmission lumineuse de ladite deuxième zone.La feuille de vitrocéramique peut également comprendre au moins une zone de transmission intermédiaire. La(les) zone(s) de transmission lumineuse intermédiaire présente(nt) une transmission lumineuse supérieure à celle de la deuxième zone et inférieure à celle de la première zone. Elle(s) présente(nt) typiquement une transmission lumineuse de 3 à 10%, voire de 5 à 8%. Lorsque la feuille de vitrocéramique comprend plusieurs zones de transmission lumineuse intermédiaire, celles-ci peuvent présenter toute des propriétés de transmission lumineuse identique ou avoir chacune une transmission lumineuse différente des autres zones de transmission lumineuse intermédiaire.

La première zone peut être continue ou discontinue - c'est-à-dire être formée de plusieurs sous-zones. La surface de la première zone, le cas échéant additionnée de celle de la(des) zone(s) de transmission lumineuse intermédiaire, représente typiquement au moins 1% de la surface de la feuille de vitrocéramique, de préférence au moins 5%, voire au moins 10%, de la surface de la feuille de vitrocéramique. Elle représente généralement au plus 50% de la surface de la feuille de vitrocéramique.

La première zone, et éventuellement la(les) zone(s) de transmission lumineuse intermédiaire, présente une surélévation par rapport à la deuxième zone. Cette surélévation est de l'ordre 1 à 100 µm, voire 5 à 70 µm, ou 10 à 50 µm.

Le procédé selon l'invention a pour avantage de permettre un traitement rapide de larges zones. Il permet, par une simple irradiation laser non sélective d'une feuille de vitrocéramique d'augmenter sélectivement la transmission lumineuse de certaines zones de la feuille de vitrocéramique. Le procédé selon l'invention ne nécessite en effet pas pour cela d'irradier uniquement les zones où l'on souhaite augmenter significativement la transmission lumineuse. L'avantage de ce procédé est, qu'au contraire, l'ensemble de la feuille de vitrocéramique peut être irradiée uniformément par une ligne laser, en particulier une ligne laser irradiant simultanément toute la largeur de la feuille de vitrocéramique. La(les) zone(s) où une augmentation de la transmission lumineuse significative est souhaitée est(sont) définie(s) sur le support par une(des) zone(s) de surface réfléchissante, et éventuellement une(des) zone(s) de surface de réflexion intermédiaire, qui est(sont) « reportée(s) » sur la feuille de vitrocéramique lors du traitement laser. Il est ainsi possible de reporter sur la feuille de vitrocéramique des motifs réalisés sur le support à l'aide d'un arrangement adéquat de zones de surface réfléchissantes, et éventuellement de zones de surface de réflexion intermédiaire, et de zones de surface non-réfléchissante, notamment absorbante, sur le support. Un masque peut être utilisé le cas échéant pour protéger certaines zones de la feuille de vitrocéramique de toute modification de leurs propriétés optiques.

Les motifs peuvent être à but esthétiques ou fonctionnels. Il peut s'agir de motifs géométriques simples, tels que des cercles, disques, des polygones (carré, rectangles...), des encadrements etc, ou plus complexes tel que des logos, voire des dessins.

La feuille de vitrocéramique peut être utilisée pour différentes applications telles que des plans de travail, dans des dispositifs de cuisson, par exemple des plaques de cuisson, notamment à induction, ou comme élément décoratif. Ainsi, il est également dérit un dispositif de cuisson comprenant une feuille de vitrocéramique telle que décrite ci-dessus ou obtenue par le procédé décrit ci-dessus.

Lorsque la feuille de vitrocéramique est utilisée dans un dispositif de cuisson tel qu'une plaque de cuisson, il est ainsi possible de délimiter certaines zones, par exemples l'encadrement de zones de chauffe ou de bandeau de commande. La réalisation d'une large zone de transmission lumineuse élevée est particulièrement avantageuse pour la visualisation d'écrans de contrôle, notamment d'écrans couleur LCD, au travers de la plaque de vitrocéramique. Dans ce cas, la ou les zones de de transmission lumineuse intermédiaire peuvent permettre d'améliorer le rendu esthétique de la feuille de vitrocéramique en formant une transition graduée, tel qu'un dégradé de transmission lumineuse, entre la zone de transmission lumineuse faible et la zone de transmission lumineuse élevée.

L'invention est illustrée à l'aide des exemples de réalisation non limitatifs qui suivent.

### EXEMPLES

Une feuille de vitrocéramique Kerablack+, commercialisée par la Société Eurokera, de 4 mm d'épaisseur, colorée au vanadium et présentant une transmission lumineuse de 1,5% mesurée selon la norme ISO 9050:2003 mesurée sous illuminant D65, observateur 2°, a été soumise à un traitement selon l'invention. Le laser utilisé est un laser continu de longueur d'onde 980 nm focalisé sous forme d'une ligne laser de 12 mm de long. La puissance du laser est fixée à 114 W et la vitesse de défilement relatif entre la ligne laser et la feuille de vitrocéramique est fixée à 20 mm/min.

Un échantillon de feuille de vitrocéramique est disposé sur un support comprenant une zone miroir en inox réfléchissant le faisceau laser et une zone noire non-réfléchissante absorbant le faisceau laser (miroir inox oxydé au laser). La feuille de vitrocéramique est irradiée par la ligne laser de façon homogène à la fois sur des zones en regard de la zone miroir du support et en regard de la zone noire. A la suite du traitement laser, on observe une augmentation significative de la transmission lumineuse sur la zone traitée en regard de la zone miroir pouvant atteindre jusqu'à 10%. Au contraire, la transmission lumineuse en regard de la zone noire reste faible (<5%).

## Revendications

1. Procédé de traitement d'une feuille de vitrocéramique monolithique comprenant :
- la fourniture d'une feuille de vitrocéramique monolithique colorée dans la masse ;
- le positionnement de la feuille de vitrocéramique sur un support ; et
- le traitement de la feuille de vitrocéramique à l'aide d'un rayonnement laser ;
**caractérisé en ce que** le support présente une première zone de surface réfléchissante et une deuxième zone de surface non-réfléchissante, et **en ce que** la feuille de vitrocéramique positionnée sur le support défile en regard du rayonnement laser.

2. Procédé selon la revendication 1, **caractérisé en ce que** le rayonnement laser est une ligne laser.

3. Procédé selon la revendication 2, **caractérisé en ce que** la ligne laser irradie simultanément toute la largeur de la feuille de vitrocéramique.

4. Procédé selon l'une des revendications 1 à 3, **caractérisé en ce que** le rayonnement laser a une longueur d'onde entre 800 et 1200 nm.

5. Procédé selon l'une des revendications 1 à 4, **caractérisé en ce que** la feuille de vitrocéramique est une feuille de vitrocéramique colorée au vanadium.

6. Procédé selon l'une des revendications 1 à 5, **caractérisé en ce que** le support comprend une au moins une zone de surface de réflexion intermédiaire.

7. Procédé selon l'une des revendications 1 à 6, **caractérisé en ce qu'**un masque est disposé au-dessus de la feuille de vitrocéramique.

## Patentansprüche

1. Verfahren zum Behandeln einer monolithischen Glaskeramikscheibe, umfassend:
- Bereitstellen einer in der Masse gefärbten monolithischen Glaskeramikscheibe;
- Positionieren der Glaskeramikscheibe auf einem Träger; und
- Behandeln der Glaskeramikscheibe mittels einer Laserstrahlung;
**dadurch gekennzeichnet, dass** der Träger einen ersten Bereich einer reflektierenden Oberfläche und einen zweiten Bereich einer nicht reflektierenden Oberfläche aufweist, und dass die Glaskeramikscheibe, die auf dem Träger positioniert ist, an der Laserstrahlung vorbeigeht.

2. Verfahren nach Anspruch 1, **dadurch gekennzeichnet, dass** die Laserstrahlung eine Laserlinie ist.

3. Verfahren nach Anspruch 2, **dadurch gekennzeichnet, dass** die Laserlinie gleichzeitig die gesamte Breite der Glaskeramikscheibe bestrahlt.

4. Verfahren nach einem der Ansprüche 1 bis 3, **dadurch gekennzeichnet, dass** die Laserstrahlung eine Wellenlänge zwischen 800 und 1200 nm vorweist.

5. Verfahren nach einem der Ansprüche 1 bis 4, **dadurch gekennzeichnet, dass** die Glaskeramikscheibe eine gefärbte Vanadiumglaskeramikscheibe ist.

6. Verfahren nach einem der Ansprüche 1 bis 5, **dadurch gekennzeichnet, dass** der Träger mindestens einen Zwischenreflexionsoberflächenbereich umfasst.

7. Verfahren nach einem der Ansprüche 1 bis 6, **dadurch gekennzeichnet, dass** über der Glaskeramikscheibe eine Blende angeordnet ist.

## Claims

1. A process for treating a monolithic glass-ceramic sheet comprising:
- providing a bulk-colored monolithic glass-ceramic sheet;
- positioning the glass-ceramic sheet on a support; and
- treating the glass-ceramic sheet using laser radiation;
**characterized in that** the support has a first, reflective surface zone and a second, nonreflective surface zone, and **in that** the glass-ceramic sheet positioned on the support travels opposite the laser radiation.

2. The process as claimed in claim 1, **characterized in that** the laser radiation is a laser line.

3. The process as claimed in claim 2, **characterized in that** the laser line simultaneously irradiates the entire width of the glass-ceramic sheet.

4. The process as claimed in one of claims 1 to 3, **characterized in that** the laser radiation has a wavelength of between 800 and 1200 nm.

5. The process as claimed in one of claims 1 to 4, **characterized in that** the glass-ceramic sheet is a glass-ceramic sheet colored with vanadium.

6. The process as claimed in one of claims 1 to 5, **characterized in that** the support comprises at least one surface zone of intermediate reflection.

7. The process as claimed in one of claims 1 to 6, **characterized in that** a mask is positioned on top of the glass-ceramic sheet.
